# EUROPÄISCHE PATENTSCHRIFT

(11) **EP 1 212 673 B1**
(45) Veröffentlichungstag und Bekanntmachung des Hinweises auf die Patenterteilung: **26.10.2005**
(21) Anmeldenummer: 00971234.0
(22) Anmeldetag: 28.08.2000
(51) Int. Cl.: G06F 3/033

(54) **VERFAHREN ZUR AUSGABE VON DATEN IN EINER RECHNERGESTÜTZTEN FAHRERINFORMATIONSEINRICHTUNG**
METHOD FOR OUTPUTTING DATA IN A COMPUTER-AIDED DRIVER INFORMATION DEVICE
PROCEDE D'EMISSION DE DONNEES DANS UN DISPOSITIF D'INFORMATION POUR CONDUCTEUR ASSISTE PAR ORDINATEUR

(30) Priorität: 27.08.1999 DE 19940731
(43) Veröffentlichungstag der Anmeldung: 12.06.2002
(73) Patentinhaber: ROBERT BOSCH GMBH, 70442 Stuttgart (DE)
(72) Erfinder: BLASBERG, Ernst-Ulrich, 26125 Oldenburg (DE); PIEPENBRINK, Dieter, 31188 Holle (DE); PUENTER, Werner, 30163 Hannover (DE); TOEDTER, Werner, 31171 Nordstemmen (DE); KARP, Stefan, 60487 Frankfurt (DE)
(86) Internationale Anmeldenummer: PCT/DE2000/002926
(87) Internationale Veröffentlichungsnummer: WO 2001/016689

(56) Entgegenhaltungen:
- EP-A- 0 704 675
- DE-A- 4 343 871
- US-A- 5 500 929

## Beschreibung

### Stand der Technik

Die Erfindung geht aus von einem Verfahren zur Ausgabe von Daten in einer rechnergestützten Fahrerinformationseinrichtung nach der Gattung des Hauptanspruchs. Es sind schon Fahrerinformationseinrichtungen in Kraftfahrzeugen bekannt, z.B. Navigationssysteme, bei denen Daten in einer der Fahrerinformationseinrichtung zugeordneten Anzeigeeinheit ausgegeben werden. Z.B. durch eine angezeigte Überschrift wird dabei kenntlich gemacht, worauf sich die in der Anzeigeeinheit ausgegebenen Daten beziehen. Bei Navigationssystemen wird z.B. durch eine Überschrift "Zieleingabe" deutlich gemacht, daß die dargestellten Daten mögliche Fahrziele darstellen. Mit einer zunehmenden Anzahl von Funktionen einer Fahrerinformationseinrichtung nimmt dabei die Anzahl der möglichen, in der Anzeigeeinheit ausgebbaren Daten zu. Hierdurch wird es erforderlich, daß einem Benutzer der Fahrerinformationseinrichtung anzeigbare Daten über eine Menüauswahl zur Anzeige angeboten werden. Von einem Ausgangsmenü wird ein Untermenü ausgewählt, von diesem Untermenü möglicherweise ein weiteres Untermenü und so fort, bis die von dem Fahrer gewünschten Daten angezeigt werden. Z.B. bei der Zieleingabe eines Fahrziels in ein Navigationsgerät kann dies der Fall sein, wenn zuerst eine Stadt, dann eine Straße bzw. ein spezielles Restaurant oder ein Museum als ein Fahrziel ausgewählt werden sollen. Da die Ausgabe der Daten und ggf. eine Reaktion des Benutzers der Fahrerinformationseinrichtung möglicherweise während der Fahrt des Fahrzeugs erfolgt, steht dem Fahrer für ein Erfassen der ausgegebenen Daten kaum Zeit zur Verfügung bzw. der Fahrer kann den angezeigten Daten nur eine beschränkte Aufmerksamkeit schenken, da er sich vorrangig auf den Straßenverkehr konzentrieren muss. Mitunter ist es auch möglich, dass der Straßenverkehr über eine längere Zeitphase den Fahrer so beschäftigt, dass er die Anzeige nicht betrachten kann. Schaut der Fahrer nach einer derartigen Unterbrechung wieder auf die Anzeige, muss er sich erst wieder orientieren, welche Daten angezeigt werden und insbesondere worauf sich diese Daten beziehen.

Aus der US 5,500,929 ist ein System zum Durchsuchen eines Netzwerkes mit Netzwerkanschlüssen bekannt, bei dem einzelne Telefonbücher und Einträge von Netzwerkressourcen in einem Bildschirm dargestellt sind. Wird ein bestimmter Eintrag ausgesucht, kann der Benutzer eine bestimmte Funktion veranlassen. Der Benutzer kann z.B. auf einem an das Netzwerk angeschlossenen Drucker ein Dokument ausdrucken.

### Vorteile der Erfindung

Das erfindungsgemäße Verfahren mit den Merkmalen des Hauptanspruchs hat demgegenüber den Vorteil, dass zu den Funktionsbereichen der Fahrerinformationseinrichtung jeweils ein erstes Symbol in einer Anzeigeeinheit der Fahrerinformationseinrichtung angezeigt wird und dass zu dem Funktionsbereich zugeordneten Datengruppen jeweils weitere Symbole angezeigt werden und hierbei das erste Symbol gegenüber den weiteren Symbolen hervorgehoben ist. Hierdurch ist es möglich, dass ein Fahrer durch die symbolhafte Darstellung sehr schnell erkennen kann, worauf sich die in der Anzeigeeinheit dargestellten Daten beziehen, da das Verständnis für ein Symbol durch die Hervorhebung im allgemeinen leichter fällt als einen Textinhalt zu erfassen. Da eine Fahrerinformationseinrichtung vorzugsweise über mehrere, verschiedene Hauptfunktionen verfügt, ist es insbesondere von Vorteil, daß sich ein Fahrer darüber informieren kann, zu welchem Funktionsbereich die angezeigten Daten gehören. Indem die Datengruppen und die Funktionsbereiche durch Symbole gekennzeichnet werden, kann auch darauf verzichtet werden, für verschiedene Benutzersprachen verschiedene Zuordnungen der Datengruppen bzw. der Funktionsbereiche zu Überschriften vorzusehen, die an eine jeweils gewählte Sprache angepaßt werden müssen.

Hierbei sind den Funktionsbereichen jeweils mehrere Datengruppen zugeordnet. Den Datengruppen wiederum sind einzelne Daten zugeordnet.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, daß das erste Symbol gegenüber den weiteren Symbolen vergrößert dargestellt wird, da eine Hervorhebung auf diese Weise besonders deutlich wird. Besonders vorteilhaft ist es weiterhin , daß das erste Symbol photorealistisch angezeigt wird. Durch eine derartige photorealistische Darstellung ist es einem Benutzer besonders leicht möglich, den Gegenstand des ersten Symbols zu erfassen und einen dem ersten Symbol zugeordneten Funktionsbereich zu erkennen, auch wenn er, z.B. als Benutzer eines Mietwagens, mit der Fahrerinformationseinrichtung nicht vertraut ist. Hierdurch kann die Zuordnung der Daten zu einem Funktionsbereich besonders schnell erfolgen.

Weiterhin ist es vorteilhaft, daß das erste Symbol in einer höheren Auflösung als die weiteren Symbole anzeigt wird. Hierdurch wird das erste Symbol gegenüber den folgenden Symbolen so hervorgehoben, daß es für einen Benutzer leicht zu erkennen ist, daß das erste Symbol eine übergeordnete Stellung gegenüber den weiteren Symbolen einnimmt, die sich lediglich auf die den Funktionsbereichen zugeordneten Datengruppen beziehen. Die höhere Auflösung muß dabei nicht beinhalten, daß die Darstellung eine anderen Auflösung der Anzeigeeinheit erfordert, sondern daß das erste Symbol detaillierte als die weiteren Symbole angezeigt wird. Ferner ist es aus dem gleichen Grund auch vorteilhaft, daß das erste Symbol in einer von den weiteren Symbolen abweichenden Farbe anzeigt wird.

Ferner ist es vorteilhaft, daß den Datengruppen ein Prioritätswert zugewiesen wird und die weiteren Symbole zu einer Datengruppe des ausgewählten Funktionsbereichs angezeigt werden, wenn der Prioritätswert der Datengruppe einen vorgegebenen Prioritätswert überschreitet. Da es möglich ist, daß ein Funktionsbereich mehr Datengruppen umfaßt, als gleichzeitig in der Anzeigeeinheit darstellbar sind, kann durch eine Auswertung der Prioritätswerte z.B. durch eine Recheneinheit der Fahrerinformationseinrichtung geregelt werden, welche Datengruppen gleichzeitig angezeigt werden. Werden die Datengruppen nach ihrer Priorität geordnet angezeigt, wird dadurch sichergestellt, daß im allgemeinen als wichtig angesehene Datengruppen zuerst zur Anzeige kommen. Dabei ist es insbesondere von Vorteil, daß die Datengruppe mit höchster Priorität automatisch als erste angezeigt wird, sobald ein Funktionsbereich ausgewählt wurde. Es ist ferner von Vorteil, eine Prioritätswert auch den einzelnen Daten zuzuweisen, damit für den Fall, daß eine Datengruppe mehr Daten enthält, als in der Zeichnung darstellbar sind, ebenfalls die wichtigsten Daten zuerst ausgegeben werden. Es werden auch hier vorzugsweise die Daten zuerst ausgegeben, die einen vorgegebenen Prioritätswert übersteigen.

Ferner ist es vorteilhaft, daß in einem Bereich der Anzeigeeinheit eine Möglichkeit zum Wechsel in eine andere Datengruppe, in einen anderen Datensatz und/oder zu einem anderen Funktionsbereich angezeigt wird. Der Benutzer kann auf diese Weise direkt darauf hingewiesen werden, welche Tasten er bedienen muß, um eine andere Datengruppe, einen anderen Datensatz und/oder einen anderen Funktionsbereich aufzurufen. Erfolgloses Drücken von Tasten auf einer Bedieneinheit kann hierdurch vermieden werden, so daß eine schnellere und den Fahrer weniger ablenkende Ausgabe von Daten erfolgen kann.

Weiterhin ist es vorteilhaft, eine Fahrerinformationseinrichtung mit einer Eingabeeinheit vorzusehen, da eine erfindungsgemäße Ausgabe von Daten in einer Anzeigeeinheit über eine Eingabeeinheit durch einen Benutzer direkt steuerbar ist.

Weiterhin ist es vorteilhaft, daß in der Anzeigeeinheit die Eingabeeinheit dargestellt ist und daß mindestens eine Taste der Eingabeeinheit bei der Darstellung in der Anzeigeeinheit hervorgehoben ist. Durch diese Hervorhebung wird deutlich gemacht, daß durch diese Taste ein anderer Funktionsbereich, eine andere Datengruppe und/oder ein anderer Datensatz gewählt werden kann, so daß die Ausgabeeinheit einem Fahrer direkt einen Hinweis darauf gibt, wie er die Eingabeeinheit zu bedienen hat.

### Zeichnung

Ausführungsbeispiele der Erfindung sind in der Zeichnung dargestellt und in der nachfolgenden Beschreibung näher erläutert.

Es zeigen
Figur 1 die Darstellung eines Anzeigebildes in einer Anzeigeeinheit einer Fahrerinformationseinrichtung mit einer Datenausgabe nach dem erfindungsgemäßen Verfahren, die Figuren 2 und 3 weitere Darstellungen eines Anzeigebildes in einer Anzeigeeinheit einer Fahrerinformationseinrichtung nach dem erfindungsgemäßen Verfahren,
Figur 4 eine Struktur von abgelegten Daten für die Anzeige nach dem erfindungsgemäßen Verfahren,
Figur 5 einen Ablauf eines erfindungsgemäßen Verfahrens und
Figur 6 eine Vorrichtung zur Durchführung des erfindungsgemäßen Verfahrens.

### Beschreibung des Ausführungsbeispiels

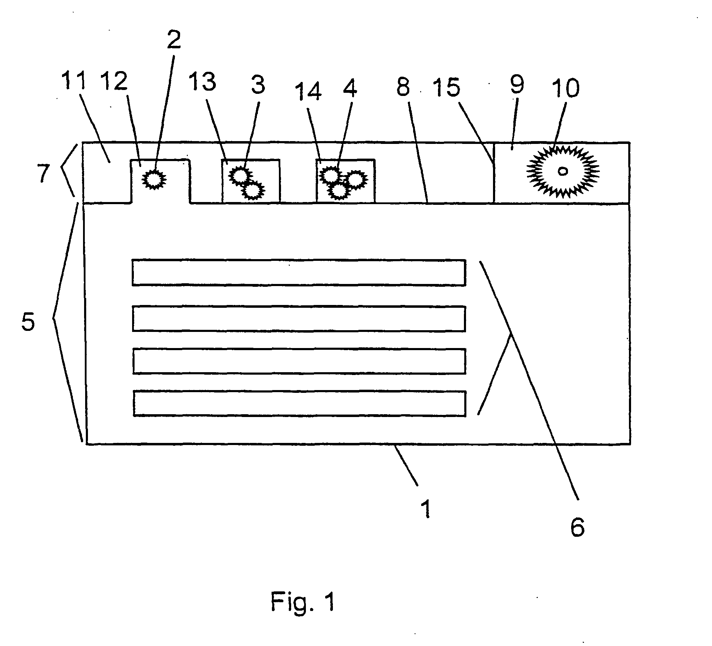

In der Figur 1 ist ein Anzeigebild 1 in einer Anzeigeeinheit einer Fahrerinformationseinrichtung dargestellt. In dem Anzeigebild 1 sind ein erstes Symbol 10, ein zweites Symbol 2, ein drittes Symbol 3 und ein viertes Symbol 4 dargestellt. Das zweite Symbol 2 ist einem ersten Bereich 5 zugeordnet, in dem Daten 6 angezeigt werden. Das erste bis vierte Symbole 10, 2, 3, 4 sind einem zweiten Bereich 7 zugeordnet. Das dritte Symbol 3 und das vierte Symbol 4 sind durch eine erste Linie 8 von dem ersten Bereich 5 getrennt. Das erste Symbol 10 ist vor einem ersten Hintergrund 9 dargestellt, der durch eine zweite Linie 15 von einem zweiten Hintergrund 11 abgetrennt ist. Das zweite Symbol 2 ist vor einem dritten Hintergrund 12 dargestellt, der mit dem ersten Bereich 5 direkt verbunden ist und in einem bevorzugten Ausführungsbeispiel eine gleiche Hintergrundfarbe wie der erste Bereich 5 aufweist. Das dritte Symbol 3 ist vor einem vierten Hintergrund 13 dargestellt, der von dem zweiten Hintergrund 11 und von dem ersten Bereich 5 getrennt ist. Das vierte Symbol 4 ist ebenfalls vor einem fünften Hintergrund 14 dargestellt, der von dem zweiten Hintergrund 11 und von dem ersten Bereich 5 getrennt ist. Der erste, zweite, dritte, vierte und fünfte Hintergrund 9, 11, 12, 13 und 14 befinden sich alle in dem zweiten Bereich 7.

Bei dem gewählten Ausführungsbeispiel stellt das erste Symbol 10 ein Zahnrad dar. Das erste Symbol 10 soll auf diese Weise einen Funktionsbereich "Einstellungen" symbolisieren. In dem Funktionsbereich "Einstellungen" kann ein Benutzer Eigenschaften der Fahrerinformationseinrichtung ändern, z.B. ob eine Sprachausgabe erfolgen soll, in welcher Sprache dann die Sprachausgabe erfolgen soll, Helligkeit und Farbintensität einer Anzeige vorgeben oder Kriterien festlegen, nach denen eine Routenauswahl erfolgen soll. Die Daten 6 sind dabei die möglichen Eigenschaften der Fahrerinformationseinrichtung, die geändert werden sollen. In einem bevorzugten Ausführungsbeispiel wird neben der Eigenschaft auch direkt der eingestellte Wert angezeigt, z.B. in der Anzeige "Lautstärke" ein Zahlenwert, der die eingestellte Lautstärke repräsentiert. Bei den Eigenschaften der Fahrerinformationseinrichtung gibt es Eigenschaften, wie z.B. die Lautstärke einer Sprachausgabe, die ein Fahrer möglicherweise öfters ändern wird, als z.B. die Eigenschaft, ob die Ausgabe einer Entfernung in Kilometer und Meter oder in Meilen und Fuß erfolgen soll. In dem gewählten Ausführungsbeispiel wird eine Wichtigkeit der auszugebenden Daten einem Benutzer der Fahrerinformationseinrichtung durch das zweite, dritte und vierte Symbol 2, 3 und 4 symbolisiert. Jedem Symbol ist eine Datengruppe zugeordnet, deren Daten Eigenschaften der Fahrerinformationseinrichtung repräsentieren.

Das zweite Symbol 2 ist eine Darstellung eines Zahnrades, das dritte Symbol 3 aus einer Darstellung zweier Zahnräder und das vierte Symbole 4 aus einer Darstellung dreier Zahnrädern, wodurch verdeutlicht wird, daß mit zunehmender Anzahl der Zahnräder in einem Symbol allgemein die Häufigkeit geringer ist, daß ein Fahrer die zu der entsprechenden Datengruppe zugehörenden Daten in Form von Eigenschaften der Fahrerinformationseinrichtung aufrufen oder ändern will. Wird nun von einem Benutzer z.B. die dem dritten Symbol 3 zugeordnete Datengruppe aufgerufen, so werden statt den in Figur 1 angezeigten Daten 6 die dem dritten Symbol 3 zugeordneten Daten in dem ersten Bereich 5 angezeigt. Dies ist in der Figur 1 nicht dargestellt. Ebenso ist es in der Figur 1 nicht dargestellt, daß eine Verbindung des vierten Hintergrunds 13 mit dem ersten Bereich 5 und einer Abtrennung des dritten Hintergrunds 12 von dem ersten Bereich 5 erfolgt, falls die dem dritten Symbol 3 zugeordnete Datengruppe ausgewählt wird. Unabhängig davon, ob die dem zweiten, dem dritten oder dem vierten Symbol 2, 3, 4 zugeordnete Datengruppe ausgewählt wird, wird das erste Symbol 10 unverändert angezeigt. Es ist vorzugsweise eine photorealistische Darstellung eines Zahnrades, die größer dargestellt ist als das zweite, dritte und vierte Symbol 2, 3, 4, die übrigen Symbole. Die Auflösung, in der das erste Symbol 10 und der zugehörige erste Hintergrund 9 dargestellt sind, ist vorzugsweise ebenfalls höher als die Auflösung der Darstellung der übrigen Symbole. Einem Fahrer wird somit angezeigt, unabhängig welche Datengruppe gerade von dem Fahrer oder einer Recheneinheit der Fahrerinformationseinrichtung ausgewählt ist, daß der Funktionsbereich "Einstellung" befindet und sich die angezeigten Daten auf Einstellungen bzw. Eigenschaften der Fahrerinformationseinrichtung beziehen. Sollte die Datengruppe umfangreicher sein als die Darstellung der Daten 6 im ersten Bereich 5 zuläßt, so ist es einerseits möglich, daß die Daten, die in der Anzeigeeinheit ausgegeben werden, zumindest teilweise Verweise auf auswählbare Untermenüs, also Verweise auf andere Daten sind. Ferner ist es möglich, daß ein Benutzer z.B. über eine Tasteneingabe die zu einer Datengruppe gehörenden, angezeigten Daten teilweise verschwinden und dafür andere Daten, die zu der gleichen Datengruppe gehören, sichtbar werden. Dies kann z.B. durch einen Pfeil angezeigt werden, der unterhalb und/oder neben den Daten 6 in dem Anzeigebild 1 in dem ersten Bereich 5 angezeigt wird, in der Figur 1 jedoch nicht dargestellt ist.

Das erste Symbol 10 unterscheidet sich ferner vorzugsweise auch in der Farbe von den weiteren Symbolen 2, 3, 4. Ebenfalls unterscheidet sich der erste Hintergrund von dem dritten, vierten und fünften Hintergrund 12, 13, 14. Der zweite Hintergrund 11 hebt sich vorzugsweise ebenfalls von dem dritten, vierten und fünften Hintergrund 12, 13, 14 ab, damit auch das zweite, dritte und vierte Symbol 2, 3, 4 hervorgehoben wird.

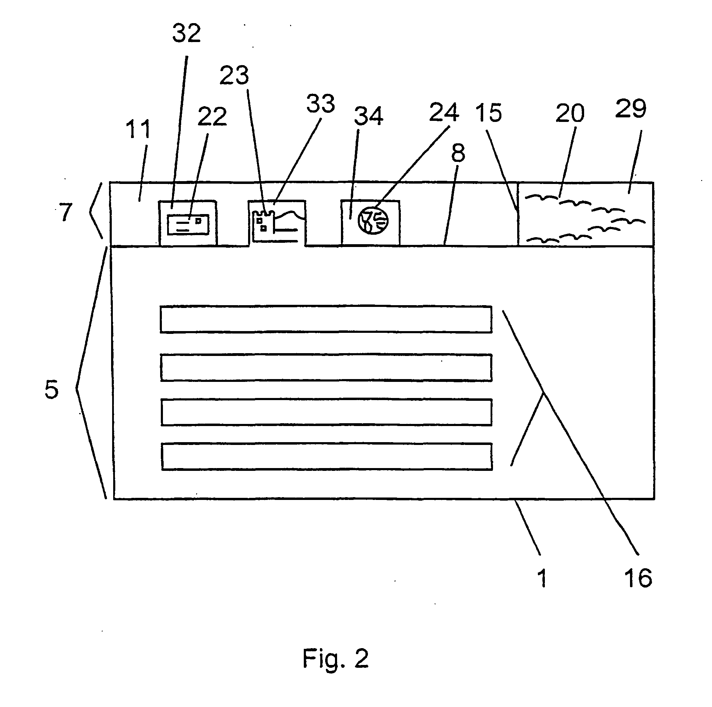

In der Figur 2 ist das Anzeigebild 1 der Fahrerinformationseinrichtung mit einer Ausgabe von Daten zu einem anderen Funktionsbereich der Fahrerinformationseinrichtung dargestellt, nämlich der Zieleingabe. Hier und im folgenden bezeichnen gleiche Bezugszeichen die gleichen Komponenten.

In dem Anzeigebild 1 ist nun ein erstes Symbol 20 vor einem ersten Hintergrund 29 sichtbar. Ferner ist ein zweites Symbol 22 vor einem dritten Hintergrund 32, ein drittes Symbol 23 vor einem vierten Hintergrund 33 und ein viertes Symbol 24 vor einem fünften Hintergrund 34 sichtbar. In dem ersten Bereich sind Daten 16 dargestellt, die einer Datengruppe zugeordnet sind, die wiederum dem dritten Symbol 23 zugeordnet ist. Die Linie 8 trennt nun den ersten Bereich 5 von dem ersten, dem zweiten und dem vierten Symbol 20, 22, 24 sowie dem ersten, dritten und fünften Hintergrund 29, 32, 34. Das erste Symbol 20 stellt Zugvögel dar, die einen Fahrer auf die Funktion "Zieleingabe" hinweisen. Das zweite Symbol 22 ist ein Brief, der auf eine Adresseneingabe, z.B. die Eingabe eines Fahrziels, einer Stadt, einer Straße und/oder Hausnummer, hinweist. Das dritte Symbol 23 symbolisiert interessante bzw. wichtige Fahrziele, sogenannte "Points of Interests" (POI). Das vierte Symbol 24 symbolisiert eine Weltkugel und verweist auf ausgebbare Daten in der Form verschiedener Kartendarstellungen. Die Daten 16, die in der Figur 2 zugeordnet zu dem dritten Symbol 23 angezeigt werden, sind z.B. die Namen von Museen, Restaurants, Aussichtspunkten oder dergleichen. Auch in diesem Fall können die Daten Verweise auf Untermenüs sein bzw. die angezeigten Daten können durch eine Benutzer verschoben werden, so daß andere, der gleichen Datengruppe zugeordnete Daten sichtbar werden. Auch in diesem Fall wird unabhängig von der ausgewählten Datengruppe das erste Symbol 20 angezeigt, solange sich ein Benutzer im Funktionsbereich "Zieleingabe" befindet.

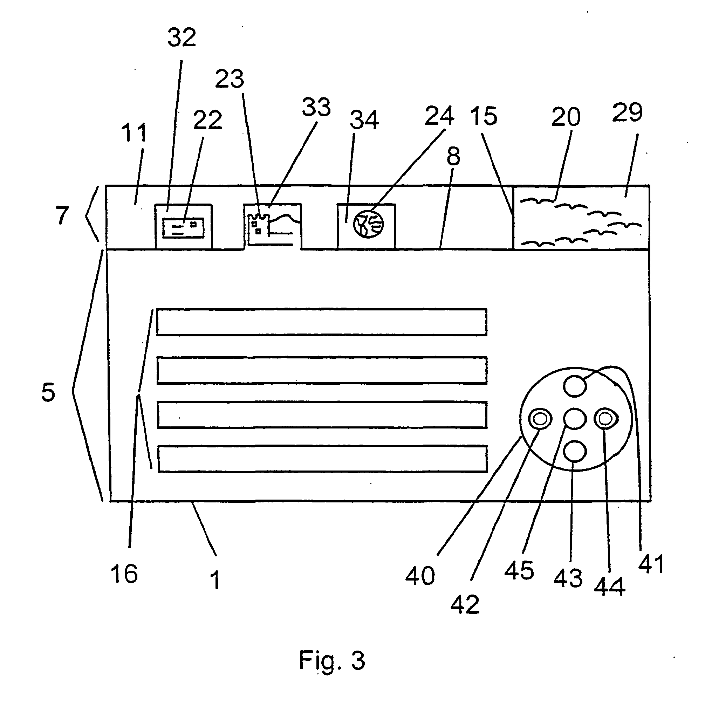

In der Figur 3 sind neben den in der Figur 2 bereits gezeigten Darstellungen eine Eingabeeinheit 40 mit einer ersten Taste 41, einer zweiten Taste 42, einer dritten Taste 43, einer vierten Taste 44 und einer fünften Taste 45 dargestellt. Die zweite Taste 42 und die vierte Taste 44 sind hervorgehoben dargestellt. In diesem Fall wird durch die Hervorhebung angezeigt, daß sowohl durch den Druck auf die zweite Taste 42 als auch auf die vierte Taste 44 die dargestellte Datengruppe gewechselt werden kann. Wird die zweite Taste 42 gedrückt, wird die zu dem zweiten Symbol 22 gehörende Datengruppe angezeigt, wird die vierte Taste 44 gedrückt, wird die dem vierten Symbol 24 zugeordnete Datengruppe angezeigt. Da die übrigen Tasten nicht hervorgehoben sind, ist dem Fahrer hindurch angezeigt, daß durch einen Druck auf diese Tasten eine Datengruppe nicht gewechselt werden kann. Bei einem Druck auf die zweite Taste 42 wird dabei vorzugsweise zu der dem zweiten Symbol 22 zugeordneten Datengruppe gewechselt. Bei einem Druck auf die vierte Taste 44 wird dabei vorzugsweise zu der dem vierten Symbol 24 zugeordneten Datengruppe gewechselt. Vorzugsweise ist es ferner möglich, daß durch das Drücken der ersten Taste 41 und der dritten Taste 43 zwischen verschiedenen Daten 16 gewechselt und durch einen Druck auf die fünfte Taste 45 ein bestimmter Datensatz der Daten 16 ausgewählt werden kann. Die fünfte Taste 45 kann z.B. durch einen Blinkbetrieb darauf hinweisen, daß eine Bestätigung oder eine Kenntnisnahme von in der Anzeigeeinheit ausgegebenen Daten erfolgen kann.

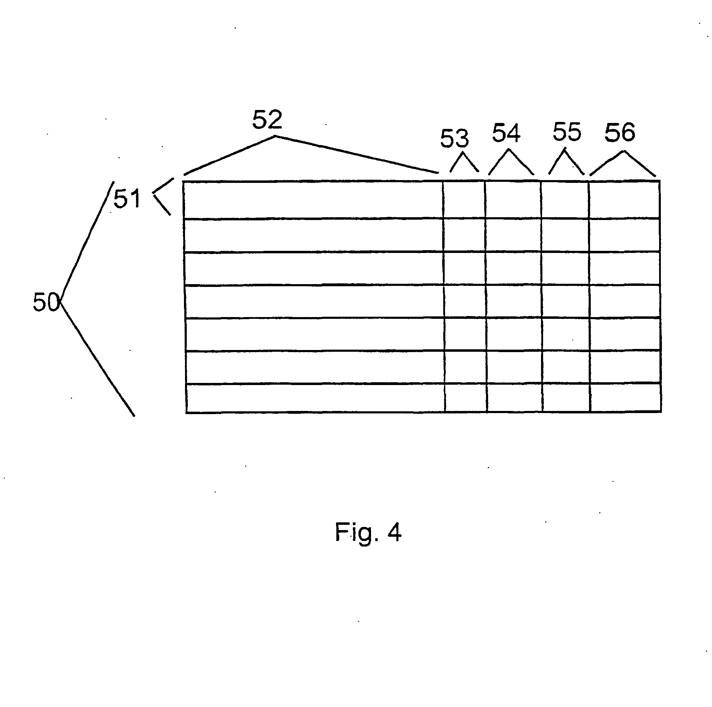

In der Figur 4 ist eine Datenstruktur, z.B. der Daten 6 oder der Daten 16, dargestellt. In einer Speichereinheit sind in einem Bereich 50 die entsprechenden Daten abgelegt. Die Daten sind in einzelne Datensätze zerlegt, von denen ein Datensatz 51 für die weitere Beschreibung ausgewählt ist. Der Datensatz 51 gliedert sich in einen Datenteil 52, einen Parameterteil 53, einen Prioritätsteil 54, einen Datengruppenzugehörigkeitsteil 55 und einen Funktionsbereichszugehörigkeitsteil 56. In dem Datenteil 52 des Datensatzes 51 sind die zu dem Datensatz 51 gehörenden, unveränderlichen Bestandteile, die in der Anzeigeeinheit ausgegeben werden, abgelegt. Dies kann z.B. die Bezeichnung "Lautstärke der Sprachausgabe" sein. Im Parameterteil 53 sind variable Einträge zu dem Datensatz 51 gespeichert. Bei der "Lautstärke" kann dies z.B. ein Zahlenwert "5" sein, durch den eine Sprachausgabe mittlerer Lautstärke symbolisiert wird. Bei einer Sprachausgabe kann dieser Zahlenwert, der in dem Parameterteil 53 abgelegt ist, durch eine Recheneinheit der Fahrerinformationseinrichtung interpretiert und ausgewertet werden. In dem Prioritätsteil 54 ist ein Prioritätswert des Datensatzes 51 für den Fall festgelegt, daß die Datengruppe, zu der der Datensatz 51 gehört, mehr Daten umfaßt als in der Anzeigeeinheit auf einmal zur Anzeige gebracht werden und/oder daß ein Funktionsbereich, zu der die Datengruppe des Datensatzes 51 gehört, mehr Datengruppen umfaßt als in der Anzeigeeinheit auf einmal darstellbar sind. Durch die Auswertung des Prioritätsteils 54 des Datensatzes 51 ist es dann möglich, zu entscheiden, ob der Datensatz 51 angezeigt wird oder erst durch die Auswahl eines Benutzers innerhalb der Datengruppe des Datensatzes 51 ausgewählt wird. In dem Datengruppenzugehörigkeitsteil 55 ist die Zugehörigkeit des Datensatzes 51 zu einer bestimmten Datengruppe abgelegt. In dem Funktionsbereichszugehörigkeitsteil 56 ist die Zugehörigkeit des Datensatzes 51 zu einem bestimmten Funktionsbereich abgelegt. In einem bevorzugten Ausführungsbeispiel ist es möglich, einzelne Datensätze auch mehreren Datengruppen und/oder Funktionsbereichen zuzuordnen, da eine Auffindbarkeit durch einen Benutzer auf diese Weise vereinfacht werden kann, da mehrere Wege bestehen den entsprechenden Datensatz zur Ausgabe zu bringen.

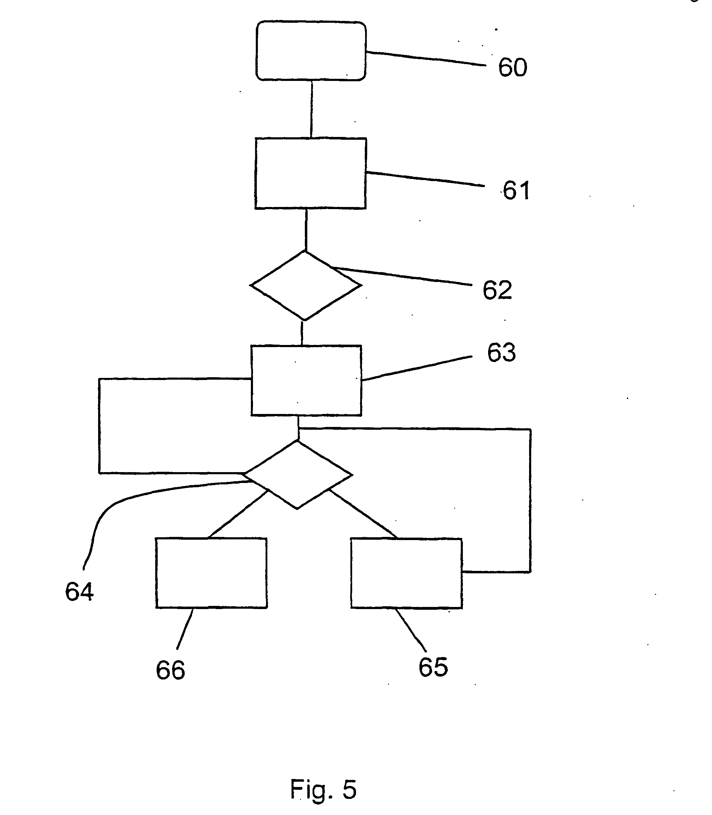

In der Figur 5 ist ein Verfahren zur Ausgabe von Daten in einer rechnergestützten Fahrerinformationseinrichtung dargestellt. In einem Initialisierungsschritt 60 wird die Datenausgabe eingerichtet. In einem ersten Verfahrensschritt 61 wird ein Grundmenü angezeigt, aus dem ein Benutzer in einem nachfolgenden Entscheidungsschritt 62 einen Funktionsbereich auswählen kann. In einem zweiten Verfahrensschritt werden für den Funktionsbereich das erste Symbol und die weiteren Symbole, die zu den Datengruppen des Funktionsbereichs gehören, in der Anzeigeeinheit ausgegeben. Ferner wird durch die Recheneinheit eine Datengruppe, vorzugsweise anhand der mit den Daten gespeicherten Prioritätswerten bestimmt, zu der bereits auch die Daten in der Anzeigeeinheit ausgegeben werden. Die Daten werden in der Anzeigeeinheit solange ausgegeben, bis in einem anschließenden zweiten Entscheidungsschritt 64 festgestellt wird, daß entweder ein anderer Funktionsbereich oder eine andere Datengruppe gewählt wird. Auch ist es möglich, daß die Fahrerinformationseinrichtung deaktiviert wird. Wird ein anderer Funktionsbereich gewählt, wird zu dem Verfahrensschritt 63 zurückverwiesen. Wird eine andere Datengruppe gewählt, so wird zu einem dritten Verfahrensschritt 65 verzweigt, in dem die andere Datengruppe zu dem Funktionsbereich ausgewählt wird. Das erste Symbol, das den Funktionsbereich kennzeichnet, wird hierbei nicht verändert. Danach wird zu dem zweiten Entscheidungsschritt 64 zurückverzweigt. Wird die Fahrerinformationseinrichtung deaktiviert, wird von dem zweiten Entscheidungsschritt 64 zu einem Abschlußschritt 66 verzweigt, in dem die Fahrerinformationseinrichtung deaktiviert wird.

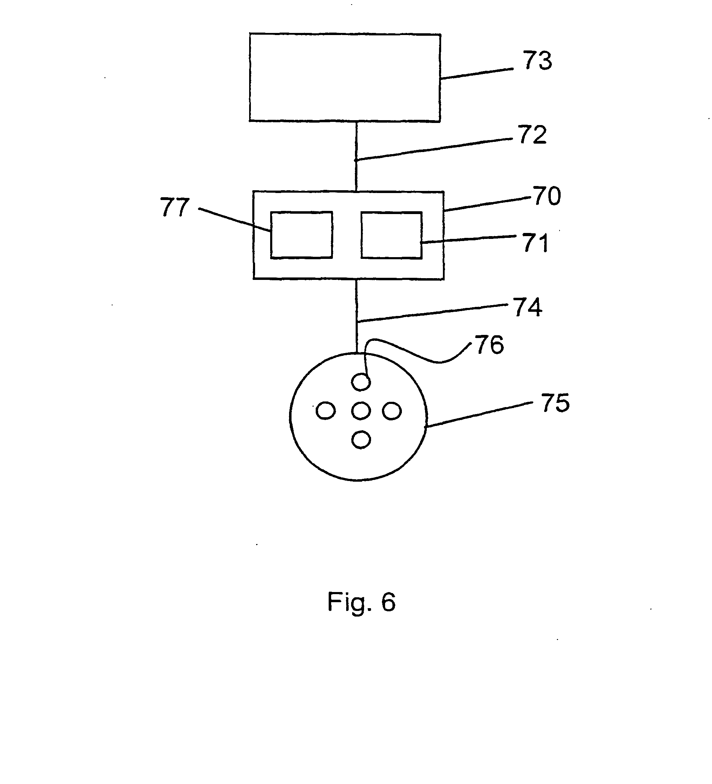

In der Figur 6 ist eine Vorrichtung zur Durchführung des erfindungsgemäßen Verfahrens dargestellt. In der Figur 6 ist eine Fahrerinformationseinrichtung 70 mit einer Speichereinheit 71 und einer Recheneinheit 77 dargestellt. Die Fahrerinformationseinrichtung 70 ist über eine erste Datenverbindung 72 mit einer Anzeigeeinheit 73 verbunden. Über eine zweite Datenverbindung 74 ist die Fahrerinformationseinrichtung 70 mit einer Eingabeeinheit 75 verbunden, die über Tasten 76 verfügt. Für die Zeichnung wurde lediglich eine Taste 76 ausgewählt. Daten, die in der Speichereinheit 71 abgelegt sind, werden von der Recheneinheit 77 entweder automatisch oder auf Anforderung durch einen Benutzer durch Druck auf Tasten 76 der Eingabeeinheit 75 in der Anzeigeeinheit 73 ausgegeben. Die Eingabeeinheit 75 erfaßt dabei vorzugsweise zumindest die Tasten, die in der Figur 3 dargestellt sind. Dabei sind die Tasten vorzugsweise so ausgeführt, daß sie z.B. durch eine Beleuchtung hervorhebbar sind. Die Anzeigeeinheit 73 ist vorzugsweise eine Flüssigkristallanzeige und entweder in der Mittelkonsole eines Fahrzeugs oder im Bereich des Kombiinstruments eines Fahrzeugs angeordnet.

Neben den dargestellten Funktionsbereichen der Fahrerinformationseinrichtung 70 sind beliebige andere Funktionsbereiche denkbar, z.B. Diagnose-, Klimaregelung-, Zielführungs-, Telefon- und/oder Reiseführerfunktion.

## Patentansprüche

1. Verfahren zur Ausgabe von Daten in einer rechnergestützten Fahrerinformationseinrichtung, wobei die Daten Datengruppen zugeordnet werden, wobei die Datengruppen Funktionsbereichen zugeordnet werden, wobei zu einem ausgewählten Funktionsbereich ein erstes Symbol in einer Anzeigeeinheit der Fahrerinformationseinrichtung angezeigt wird, wobei zu einer vorgegebenen Anzahl von mindestens zwei dem Funktionsbereich zugeordneten Datengruppen für jede dieser Datengruppen ein weiteres Symbol in der Anzeigeeinheit angezeigt wird, wobei zu einer ausgewählten Datengruppe aus der vorgegebenen Anzahl von Datengruppen die Daten der Datengruppe zumindest teilweise in der Anzeigeeinheit angezeigt werden und wobei das erste Symbol in einer hervorgehobenen Darstellung gegenüber den weiteren Symbolen angezeigt wird, **dadurch gekennzeichnet, daß** in der Anzeigeeinheit eine Eingabeeinheit zumindest teilweise dargestellt wird und wobei mindestens eine Taste der Eingabeeinheit, mit der eine andere Datengruppe und/oder ein anderer Datensatz und/oder eine anderer Funktionsbereich wählbar ist, von der Recheneinheit bestimmt und in der Anzeigeeinheit hervorgehoben ist.

2. Verfahren nach Anspruch 1, **dadurch gekennzeichnet, dass** das erste Symbol größer als die weiteren Symbole angezeigt wird.

3. Verfahren nach einem der vorhergehenden Ansprüche, **dadurch gekennzeichnet, dass** das erste Symbol photorealistisch angezeigt wird.

4. Verfahren nach einem der vorhergehenden Ansprüche, **dadurch gekennzeichnet, dass** das erste Symbol in einer höheren Auflösung der Darstellung als die weiteren Symbole angezeigt wird.

5. Verfahren nach einem der vorhergehenden Ansprüche, **dadurch gekennzeichnet, dass** das erste Symbol in einer von den weiteren Symbolen abweichenden Farbe angezeigt wird.

6. Verfahren nach einem der vorhergehenden Ansprüche, **dadurch gekennzeichnet, dass** allen Datengruppen ein Prioritätswert zugewiesen wird und für einen vorgegebenen Prioritätswert die weiteren Symbole zu den Datengruppen eines Funktionsbereichs angezeigt werden, deren zugewiesener Prioritätswert den vorgegebenen Prioritätswert übersteigt.

7. Verfahren nach einem der vorhergehenden Ansprüche, **dadurch gekennzeichnet, dass** allen Daten ein Prioritätswert zugewiesen wird und für einen vorgegebenen Prioritätswert die Daten einer Datengruppe angezeigt werden, deren zugewiesener Prioritätswert den vorgegebenen Prioritätswart übersteigt.

8. Verfahren nach Anspruch 6, **dadurch gekennzeichnet, dass** die Datengruppe mit dem höchsten Prioritätswert eines Funktionsbereiches nach der Auswahl des Funktionsbereiches automatisch die ausgewählte Datengruppe ist.

9. Verfahren nach einem der vorhergehenden Ansprüche, **dadurch gekennzeichnet, dass** einer der Funktionsbereiche nach dem Einschalten der Fahrerinformationseinrichtung automatisch ausgewählt wird.

10. Verfahren nach einem der vorhergehenden Ansprüche, **dadurch gekennzeichnet dass** in einem Bereich der Anzeigeeinheit eine Möglichkeit zum Wechsel zu einer anderen Datengruppe und/oder zu einem anderen Datensatz und/oder zu einem anderen Funktionsbereich angezeigt wird.

11. Verfahren nach einem der vorhergehenden Ansprüche, **dadurch gekennzeichnet, dass** die ersten Symbole und die jeweiligen zweiten Symbole an einem vorgegebenen Rand der Anzeigeeinheit angezeigt werden.

12. Verfahren nach einem der vorhergehenden Ansprüche, **dadurch gekennzeichnet, dass** das erste Symbol verkleinert in die jeweiligen zweiten Symbole eingeblendet wird.

13. Fahrerinformationseinrichtung in einem Fahrzeug mit mindestens einer Recheneinheit (77), mindestens einer Eingabeeinheit (75) und mindestens einer Anzeigeeinheit (73), wobei in einer Speichereinheit (71) Daten gespeichert sind, die über die Eingabeeinheit (75) abfragbar und in der Anzeigeeinheit (73) ausgebbar sind, wobei die Daten Datengruppen zugeordnet sind, wobei die Datengruppen Funktionsbereichen zugeordnet sind, wobei jedem Funktionsbereich ein erstes Symbol und jeder Datengruppe jeweils ein weiteres Symbol zugeordnet ist, wobei zu einem ausgewählten Funktionsbereich das erste Symbol ausgebbar ist, wobei zu den Datengruppen des Funktionsbereichs die Daten und die weiteren Symbole ausgebbar sind, wobei das erste Symbol größer als die weiteren Symbole ausgebbar ist, **dadurch gekennzeichnet, daß** in der Anzeigeeinheit (73) die Eingabeeinheit (75) zumindest teilweise dargestellt ist und wobei mindestens eine Taste (76) der Eingabeeinheit (75), mit der eine andere Datengruppe und/oder ein anderer Datensatz und/oder eine anderer Funktionsbereich wählbar ist, von der Recheneinheit (77) bestimmt und in der Anzeigeeinheit (73) hervorgehoben ist.

## Claims

1. Method for outputting data in a computer-aided driver information device, where the data are allocated to data groups, where the data groups are allocated to function ranges, where a selected function range has a first symbol displayed for it on a display unit in the driver information device, where a prescribed number of at least two data groups associated with the function range have a further symbol displayed for each of these data groups on the display unit, where a selected data group from the prescribed number of data groups has at least some of the data from the data group displayed for it on the display unit, and where the first symbol is displayed in a highlighted representation in comparison with the other symbols, **characterized in that** the display unit shows at least part of an input unit, and where at least one key on the input unit, which can be used to select another data group and/or another data record and/or another function range, is determined by the processor and is highlighted on the display unit.

2. Method according to Claim 1, **characterized in that** the first symbol is displayed in a larger format than the other symbols.

3. Method according to one of the preceding claims, **characterized in that** the first symbol is displayed photorealistically.

4. Method according to one of the preceding claims, **characterized in that** the first symbol is displayed in a higher representation resolution than the other symbols.

5. Method according to one of the preceding claims, **characterized in that** the first symbol is displayed in a different colour from the other symbols.

6. Method according to one of the preceding claims, **characterized in that** all data groups are allocated a priority value, and for a prescribed priority value the other symbols are displayed for a function range's data groups whose allocated priority value exceeds the prescribed priority value.

7. Method according to one of the preceding claims, **characterized in that** all data are allocated a priority value, and for a prescribed priority value the data are displayed from a data group whose allocated priority value exceeds the prescribed priority value.

8. Method according to Claim 6, **characterized in that** the data group with the highest priority value in a function range after the function range has been selected is automatically the selected data group.

9. Method according to one of the preceding claims, **characterized in that** one of the function ranges is automatically selected after the driver information device is switched on.

10. Method according to one of the preceding claims, **characterized in that** an area on the display unit displays an option for changing to another data group and/or to another data record and/or to another function range.

11. Method according to one of the preceding claims, **characterized in that** the first symbols and the respective second symbols are displayed at a prescribed edge of the display unit.

12. Method according to one of the preceding claims, **characterized in that** the first symbol is merged into the respective second symbols in a reduced format.

13. Driver information device in a vehicle having at least one processor (77), at least one input unit (75) and at least one display unit (73), where a memory unit (71) stores data which can be requested using the input unit (75) and which can be output on the display unit (73), where the data are associated with data groups, where the data groups are associated with function ranges, where each function range has an associated first symbol and each data group has a respective associated further symbol, where a selected function range can have the first symbol output for it, where the data groups of the function range can have the data and the other symbols output for them, where the first symbol can be output in a larger format than the other symbols, **characterized in that** the display unit (73) shows at least part of the input unit (75), and where at least one key (76) on the input unit (75), which can be used to select another data group and/or another data record and/or another function range, is determined by the processor (77) and is highlighted on the display unit (73).

## Revendications

1. Procédé pour l'émission de données dans une installation d'information de conducteur assisté par ordinateur selon lequel :
on associe les données en groupe de données,
on associe les groupes de données à des plages fonctionnelles,
pour une plage fonctionnelle sélectionnée on affiche un premier symbole dans une unité d'affichage de l'installation d'information du conducteur,
pour un nombre prédéterminé d'au moins deux groupes de données associés à la plage fonctionnelle, on affiche un autre symbole pour chacun de ces groupes de données dans l'unité d'affichage,
pour un groupe de données sélectionné parmi le nombre prédéfini de groupes de données on affiche les données des groupes de données au moins en partie dans l'unité d'affichage, et
on affiche le premier symbole par une représentation mise en avant par rapport aux autres symboles,
**caractérisé en ce que**
dans l'unité d'affichage on affiche au moins partiellement une unité d'entrée, et l'unité de calcul détermine au moins une touche de l'unité d'entrée à l'aide de laquelle on peut sélectionner un autre groupe de données et/ou un autre jeu de données et/ou une autre plage de fonction, et cette touche est mise en avant dans l'unité d'affichage.

2. Procédé selon la revendication 1,
**caractérisé en ce que**
le premier symbole est affiché plus grand que les autres symboles.

3. Procédé selon l'une quelconque des revendications précédentes,
**caractérisé en ce que**
le premier symbole est affiché de manière réaliste comme une photo.

4. Procédé selon l'une quelconque des revendications précédentes,
**caractérisé en ce que**
le premier symbole est affiché avec une résolution plus grande pour l'affichage que les autres symboles.

5. Procédé selon l'une quelconque des revendications précédentes,
**caractérisé en ce que**
le premier symbole est affiché avec une couleur différente de celle des autres symboles.

6. Procédé selon l'une quelconque des revendications précédentes,
**caractérisé en ce que**
tous les groupes de données ont une priorité et pour une priorité prédéfinie pour les groupes de données d'une plage fonctionnelle on affiche les autres symboles dont la priorité attribuée est supérieure à la priorité prédéfinie.

7. Procédé selon l'une quelconque des revendications précédentes,
**caractérisé en ce que**
toutes les données ont une priorité et pour une priorité prédéfinie on affiche les données d'un groupe de données dont la priorité attribuée dépasse la priorité prédéfinie.

8. Procédé selon la revendication 6,
**caractérisé en ce que**
le groupe de données de plus grande priorité d'une plage fonctionnelle est automatiquement le groupe de données choisi après la sélection de la plage fonctionnelle.

9. Procédé selon l'une quelconque des revendications précédentes,
**caractérisé en ce que**
l'une des plages fonctionnelles est sélectionnée automatiquement après le branchement de l'installation d'information du conducteur.

10. Procédé selon l'une quelconque des revendications précédentes,
**caractérisé en ce que**
dans une plage de l'unité d'affichage on affiche une possibilité de changement vers un autre groupe de données et/ou un autre jeu de données et/ou une autre plage fonctionnelle.

11. Procédé selon l'une quelconque des revendications précédentes,
**caractérisé en ce que**
les premiers symboles et les seconds symboles respectifs sont affichés à bord prédéfini de l'unité d'affichage.

12. Procédé selon l'une quelconque des revendications précédentes,
**caractérisé en ce que**
le premier symbole est incrusté avec des dimensions plus petites dans les seconds symboles respectifs.

13. Installation d'information du conducteur dans un véhicule comportant au moins une unité de calcul (77), au moins une unité d'entrée (75) et au moins une unité d'affichage (73), dans laquelle
des données enregistrées dans une mémoire (71) qui peut être interrogée par l'intermédiaire de l'unité d'entrée (75) peuvent être émises par l'unité d'affichage (73) en étant associées à des groupes de données, les groupes de données étant associés à des plages fonctionnelles,
à chaque plage fonctionnelle est associé un premier symbole et à chaque groupe de données est associé chaque fois un autre symbole,
et pour une plage fonctionnelle sélectionnée, on peut émettre le premier symbole, et
pour les groupes de données de la plage fonctionnelle on peut émettre les données des autres symboles,
le premier symbole étant émis plus grand que les autres symboles,
**caractérisée en ce que**
l'unité d'affichage (73) présente au moins en partie l'unité d'entrée (75), et l'unité de calcul (77) définit
au moins une touche (76) de l'unité d'entrée (75) permettant de sélectionner un autre groupe de données et/ou un autre jeu de données et/ou une autre plage de fonction, et cette touche est mise en avant dans l'unité d'affichage (73).
